(19) Europäisches Patentamt
European Patent Office
Office européen des brevets

(11) **EP 4 625 985 A1**

(12) **EUROPEAN PATENT APPLICATION**

(43) Date of publication:
**01.10.2025 Bulletin 2025/40**

(21) Application number: **24305439.2**

(22) Date of filing: **25.03.2024**

(51) International Patent Classification (IPC):
*H04N 19/12* (2014.01)    *H04N 19/157* (2014.01)
*H04N 19/159* (2014.01)    *H04N 19/176* (2014.01)
*H04N 19/70* (2014.01)    *H04N 19/61* (2014.01)

(52) Cooperative Patent Classification (CPC):
**H04N 19/12; H04N 19/159; H04N 19/176;**
**H04N 19/61; H04N 19/70;** H04N 19/147

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BONNINEAU, Charles**
**MONTREAL, H2J 1G1 (CA)**

• **PURI, Saurabh**
**SAINT-LAZARE, J7T 0P6 (CA)**
• **MARZUKI, Ismail**
**MONTREAL, H3J 1V4 (CA)**
• **LE LEANNEC, Fabrice**
**35830 BETTON (FR)**
• **BOSSEN, Frank**
**TORONTO, ON M6G 3H1 (CA)**

(74) Representative: **Interdigital**
**Immeuble ZEN 2**
**845 A, avenue des Champs Blancs**
**35510 Cesson-Sévigné (FR)**

(54) **HYBRID EXPLICIT/IMPLICIT LFNST/NSPT**

(57) A method and an apparatus for encoding or decoding an image or a video are provided wherein an intra prediction mode for a block of the image or the video. A non-separable transform for the block is selected in a first set of non-separable transforms based on the intra prediction mode obtained for the block, and the block is encoded or decoded using the selected non-separable transform.

1100

1110
Obtaining Intra prediction mode

1120
Selecting non-separable transform

1130
Encoding the block

FIG. 11

EP 4 625 985 A1

**Description**

<u>TECHNICAL FIELD</u>

The present embodiments generally relate to video compression. The present embodiments relate to a method and an apparatus for encoding or decoding an image or a video. More particularly, the present embodiments relate to improving transform coding in video compression system.

<u>BACKGROUND</u>

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

<u>SUMMARY</u>

According to an aspect, a method for encoding an image or a video is provided. The method comprises obtaining an intra prediction mode for a block of the image or the video, selecting a non-separable transform for the block in a first set of non-separable transforms, based on the intra prediction mode obtained for the block, and encoding the block using the selected non-separable transform.

According to another aspect, an apparatus for encoding an image or a video is provided. The apparatus comprises one or more processors operable to obtain an intra prediction mode for a block of the image or the video, select a non-separable transform for the block in a first set of non-separable transforms, based on the intra prediction mode obtained for the block, and encode the block using the selected non-separable transform.

According to an aspect, a method for decoding an image or a video is provided. The method comprises obtaining an intra prediction mode for a block of the image or the video, selecting a non-separable transform for the block in a first set of non-separable transforms, based on the intra prediction mode obtained for the block, decoding the block using the selected non-separable transform.

According to another aspect, an apparatus for decoding an image or a video is provided. The apparatus comprises one or more processors operable to obtain an intra prediction mode for a block of the image or the video, select a non-separable transform for the block in a first set of non-separable transforms, based on the intra prediction mode obtained for the block, decode the block using the selected non-separable transform.

According to another aspect, a method for encoding an image or a video is provided. The method comprising obtaining an intra prediction mode for a block of the image or the video, determining based on the intra prediction mode obtained for the block whether an index of a non-separable transform providing for selecting the non-separable transform for the block in a first set of non-separable transforms is determined in an explicit mode or in an implicit mode, wherein in the explicit mode the index of the non-separable transform is explicitly signaled in a bitstream and in the implicit mode, the index of the non-separable transform is derived from other data signaled in the bitstream, encoding the block using the determined non-separable transform.

According to another aspect, an apparatus for encoding an image or a video is provided. The apparatus comprises one or more processors operable to obtain an intra prediction mode for a block of the image or the video, determine based on the intra prediction mode obtained for the block whether an index of a non-separable transform providing for selecting the non-separable transform for the block in a first set of non-separable transforms is determined in an explicit mode or in an implicit mode, wherein in the explicit mode the index of the non-separable transform is explicitly signaled in a bitstream and in the implicit mode, the index of the non-separable transform is derived from other data signaled in the bitstream, encode the block using the determined non-separable transform.

According to an aspect, a method for decoding an image or a video is provided. The method comprises obtaining an intra prediction mode for a block of the image or the video, determining based on the intra prediction mode obtained for the block whether an index of a non-separable transform providing for selecting the non-separable transform for the block in a first set of non-separable transforms is determined in an explicit mode or in an implicit mode, wherein in the explicit mode the index of the non-separable transform is explicitly signaled in a bitstream and in the implicit mode, the index of the non-separable transform is derived from other data signaled in the bitstream, decoding the block using the determined non-separable transform. According to another aspect, an apparatus for decoding an image or a video is provided. The apparatus comprises one or more processors operable to obtain an intra prediction mode for a block of the image or the video, determine based on the intra prediction mode obtained for the block whether an index of a non-separable transform providing for selecting the non-separable transform for the block in a first set of non-separable transforms is determined in an explicit mode or in an implicit mode, wherein in the explicit mode the index of the non-separable transform is explicitly signaled in a bitstream and in the implicit mode, the index of the non-separable transform is derived from other data signaled in the bitstream, decode the block using the determined non-separable transform.

According to another aspect, a method for encoding an image or a video is provided. The method comprising obtaining an intra prediction mode for a block of the image or the video, determining based on the intra prediction mode obtained for the block whether a primary transform to be applied to the block is a single separable transform or is a separable transform selected from a plurality of separable transform, encoding the block using the determined separable transform.

According to another aspect, an apparatus for encoding an image or a video is provided. The apparatus comprises one or more processors operable to obtain an intra prediction mode for a block of the image or the video, determine based on the intra prediction mode obtained for the block whether a primary transform to be applied to the block is a single separable transform or is a separable transform selected from a plurality of separable transform, encode the block using the determined separable transform.

According to an aspect, a method for decoding an image or a video is provided. The method comprises obtaining an intra prediction mode for a block of the image or the video, determining based on the intra prediction mode obtained for the block whether a primary transform to be applied to the block is a single separable transform or is a separable transform selected from a plurality of separable transform, decoding the block using the determined separable transform.

According to another aspect, an apparatus for decoding an image or a video is provided. The apparatus comprises one or more processors operable to obtain an intra prediction mode for a block of the image or the video, determine based on the intra prediction mode obtained for the block whether a primary transform to be applied to the block is a single separable transform or is a separable transform selected from a plurality of separable transform, decode the block using the determined separable transform.

One or more embodiments also provide a computer program comprising instructions which when executed by one or more processors cause the one or more processors to perform any one of the methods for encoding or decoding an image or a video according to any of the embodiments described herein. One or more of the present embodiments also provide a non-transitory computer readable medium and/or a computer readable storage medium having stored thereon instructions for encoding or decoding an image or a video according to the methods described herein.

One or more embodiments also provide a computer readable storage medium having stored thereon a bitstream generated according to the methods described herein.

One or more embodiments also provide a method and apparatus for transmitting or receiving the bitstream generated according to the methods described herein.

According to an aspect, a device is provided that comprises an apparatus for decoding an image or a vidoe according to any one of the embodiments described herein; and at least one of (i) an antenna configured to receive or transmit a signal, the signal including data representative of the image or video, (ii) a band limiter configured to limit the signal to a band of frequencies that includes the data representative of the image or video, or (iii) a display configured to display the image or video.

In a variant, the device comprises at least one of a television, a cell phone, a tablet, a set-top box.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates a block diagram of an embodiment of a video encoder within which aspects of the present embodiments may be implemented.

FIG. 3 illustrates a block diagram of an embodiment of a video decoder within which aspects of the present embodiments may be implemented.

FIG. 4 shows an example of explicit MTS set selection in ECM.

FIG. 5 shows an example of a Region Of Interest for a LFNST16 kernel.

FIG. 6 shows an example of a Region Of Interest for a LFNST8 kernel.

FIG. 7 shows an example of a mapping of intra prediction modes to LFNST set index.

FIG. 8 shows an example of a NSPT transform applied to small block with LFNST applied for the remaining block sizes.

FIG. 9 shows an example of a method for encoding a block using a LFNST or NSPT non-separable transform.

FIG. 10 shows an example of a method for decoding a block using a LFNST or NSPT non-separable transform.

FIG. 11 illustrates an example of a method for encoding a block of a video according to an embodiment.

FIG. 12 illustrates an example of a method for decoding a block of a video according to an embodiment.

FIG. 13 illustrates an example of a method for encoding a block of a video according to another embodiment.

FIG. 14 illustrates an example of a method for decoding a block of a video according to another embodiment.

FIG. 15 illustrates an example of a variant of the method for encoding a block of a video according to FIG. 13.

FIG. 16 illustrates an example of a variant of the method for decoding a block of a video according to FIG. 14.

FIG. 17 illustrates an example of a method for encoding a block of a video according to another embodiment.

FIG. 18 illustrates an example of a method for decoding a block of a video according to another embodiment.

FIG. 19 illustrates an example of a variant of the method for encoding a block of a video according to FIG. 17.

FIG. 20 illustrates an example of a variant of the method for decoding a block of a video according to FIG. 18.

FIG. 21 illustrates an example of a method for encoding a block of a video according to a further embodiment.

FIG. 22 illustrates an example of a method for decoding a block of a video according to a further embodiment.

FIG. 23 shows two remote devices communicating over a communication network in accordance with an example of the present principles.

FIG. 24 shows the syntax of a signal in accordance with an example of the present principles.

## DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

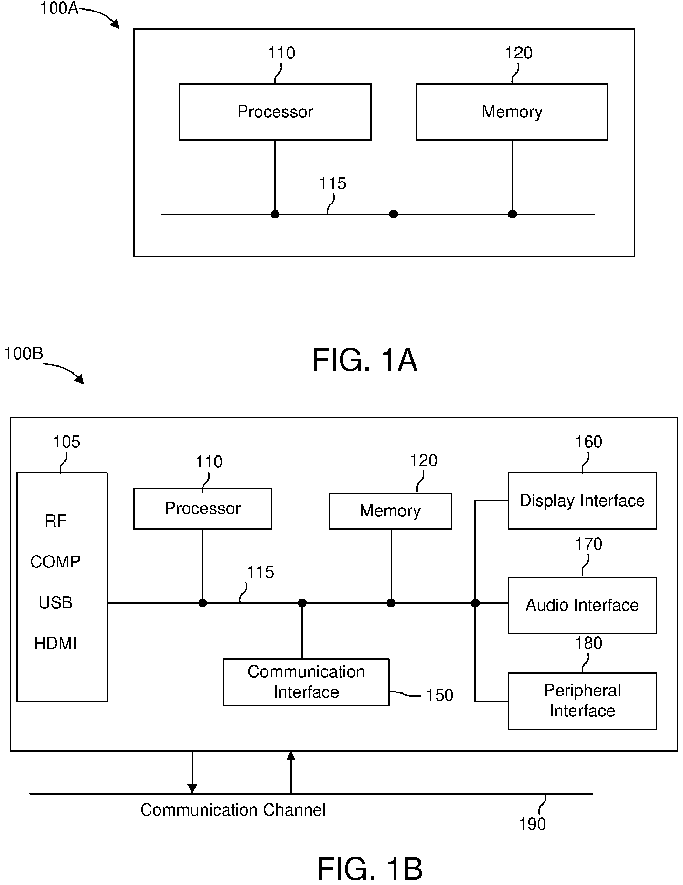

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

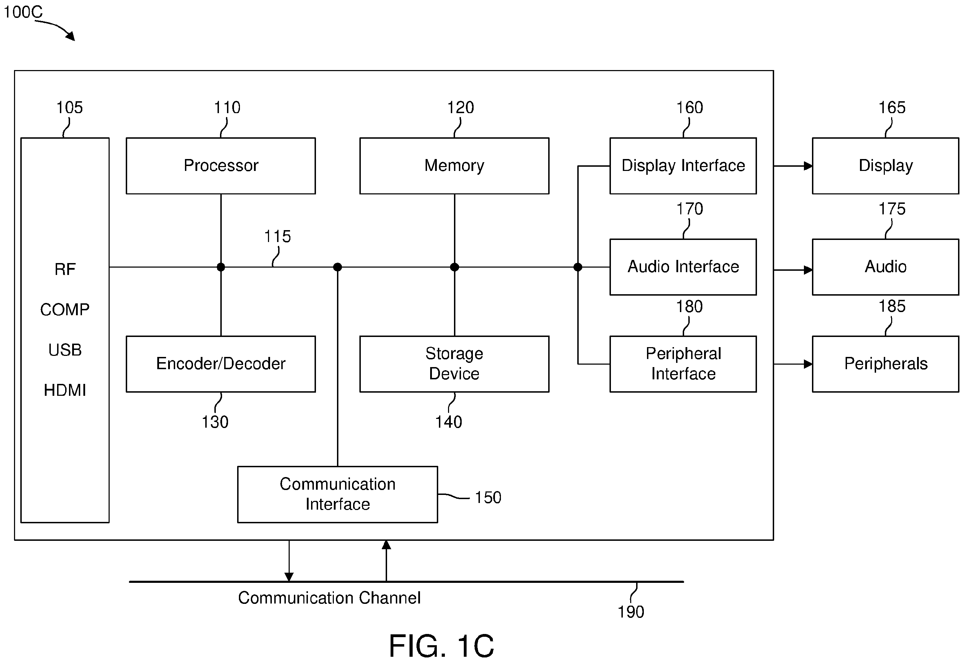

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentionned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna. Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly as for the sytem 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

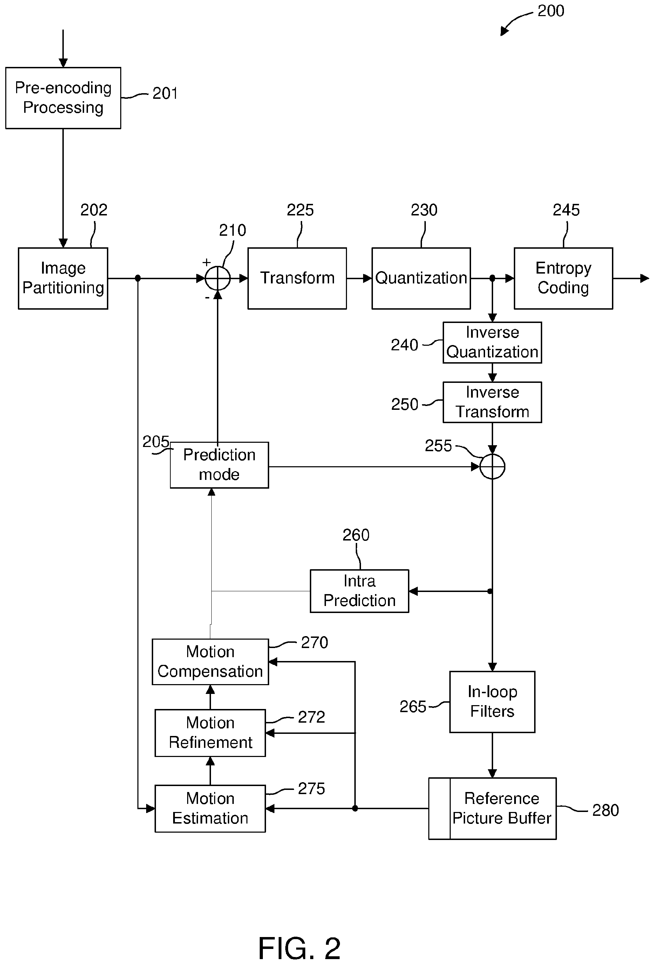

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard (*Versatile Video Coding, Standard ITU-T H.266, ISO/IEC 23090-3, 2020)* or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the endoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

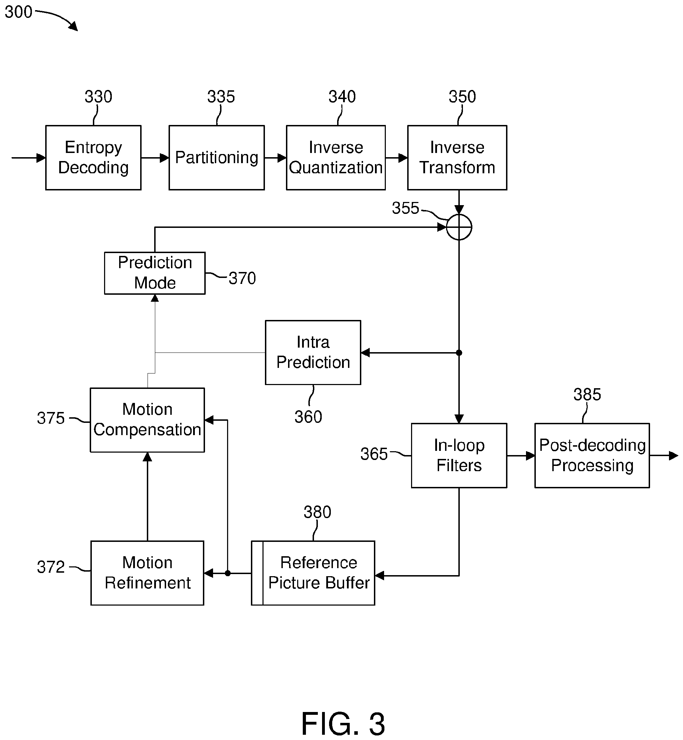

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Some of the embodiments described herein relates to encoding or decoding a video wherein transform coding uses non-separable transforms either as primary transform or seconday transform.

Some embodidements focus on improving the transform coding part of a video compression system, specifically low-frequency non-separable transform (LFNST) and non-separable primary transform (NSPT) tools. In ECM, a best non-separable kernel is selected by a rate-distortion optimization performed among three transform candidates, either for LFNST or NSPT. Although maximizing the performance, this approach increases the complexity as additional check operations are performed during the rate-distortion optimization loop. Some embodiments provided herein provide implicit LFNST/NSPT methods and apparatuses, where a best kernel from a transform set is selected from information known at the decoder side.

Other embodiments provided herein provide a hybrid approach where either implicit or explicit LFNST/NSPT is performed depending on the intra mode.

These embodiments allow a video encoder to achieve different rate-distortion and complexity trade-offs.

Embodiments described herein can be implemented for instance in a transform module of a video encoder or a video decoder, for example a transform module 225 and an inverse transform modul 250 of the video encoder 200 in FIG. 2 or an inverse transform module 350 of the video decoding 300 in FIG. 3. Part of some embodiments described herein can also be implemented in a signaling module of a video encoder or a parsing module of a video decoder, for example a n entropy coding module 245 of the video encoder 200 in FIG. 2 or an entropy decoding module 330 of the video decoding 300 in FIG. 3.

In VVC, or ECM, a two steps transform can be applied to the residual blocks of a coding unit. The first transform applied in this two-steps approach is often called the primary transform, while the second transform applied in this two-steps approach is called the secondary transform.

It should be understood that the order first, second transforms referred here relate to the order of the transform on the encoding side and that the order is reversed on the decoder side.

In VVC, forward LFNST (Low-Frequency Non Separable Transform) is applied after the DCT2 transform for intra coded blocks. LFNST is thus the secondary transform while DCT2 is the primary transform. In the decoder side, the inverse LFNST transform is applied before the inverse DCT2 transform.

In ECM (Enhanced Compression Model), another primary transform is added, named non-separable secondary transform (NSPT). This primary transform replaces the two steps DCT2-LFNST stage, and a single non-separable transform is used. This single NSPT is only allowed for small blocks, since non-separable transform for large blocks requires huge memory and computation complexity. It has been shown that this transform stage is associated with high coding gain.

For the non-separable transform, either LFNST or NSPT, a best kernel is selected by a rate-distortion optimization performed among three transform candidates and the transform index is transmitted to the decoder. The selection between NSPT and LFNST is made based on the block size. For small blocks, the encoder performs the rate distortion among 3 NSPT kernels. For larger blocks, the RDO is performed among 3 LFNST kernels.

However, the trade-off for bitrate saving and encoding time as well as signaling cost can be improved by performing the LFNST/NSPT search only for some intra modes for example.

Methods and apparatus for improving compression tradeoff when using non-separable transform are provided herein. Embodiments provided herein can for example apply to any one of the non-separable transforms used in ECM, such as the LFNST or the NSPT. It is understood that the embodiments provided herein can also apply to any other non-separable transforms or separable transforms that could be considered in a video compression system. In some embodiments, implicit non-separable transforms (e.g. for LFNST/NSPT) approaches are provided. In other embodiments, hybrid scenarios leveraging both implicit and explicit non-separable transforms are provided. In further embodiments, implicit selection of the primary transform among a plurality of primary transforms (before the secondary tranform) are provided.

MTS (Multiple Transform Selection) is used both in VVC and in ECM as follows. In the VVC design (*Versatile Video Coding, Standard ITU-T H.266, ISO/IEC 23090-3, 2020),* DST7 and DCT8 transform kernels are used in addition to DCT2. These kernels are used for intra and inter coding. Transform skip may also be used.

In ECM, additional primary transforms including DCT5, DST4, DST1, and identity transform (IDT) are employed to design the MTS sets.

It is to be noted that in current implementation of ECM and in VVC, the secondary transform LFNST is applied only when primary trasnform is DCT2. Therefore, even though, the MTS is called primary transform, the MTS transform is not followed in these implementations by a secondary transform.

Also, in ECM, MTS sets are made dependent on the TU (Tranform Unit) size and intra mode information. For blocks predicted via IntraTMP (Intra Template Matching Prediction mode), the DIMD (Decoder-side Intra Mode Derivation) process is used on the prediction block to derive an intra mode that is used for transform selection. Specifically, a horizontal gradient and a vertical gradient are calculated for each predicted sample to build a Histogram of Gradients (HoG). Then the intra prediction mode with the largest histogram amplitude values, denoted as virtual intra prediction mode (VIPM), is used to determine the MTS transform set. Overall, 16 different TU sizes are considered, and for each TU size, 5 different classes are considered depending on intra-mode information. For each class, 1, 4 or 6 different transform pairs are considered. The number of intra MTS candidates is adaptively selected (between 1, 4 and 6 MTS candidates) depending on the sum of absolute value of transform coefficients. The sum is compared against the two fixed thresholds to determine the total number of allowed MTS candidates:

    1 candidate: sum <= th0
    4 candidates: th0 < sum <= th1
    6 candidates: sum > th1

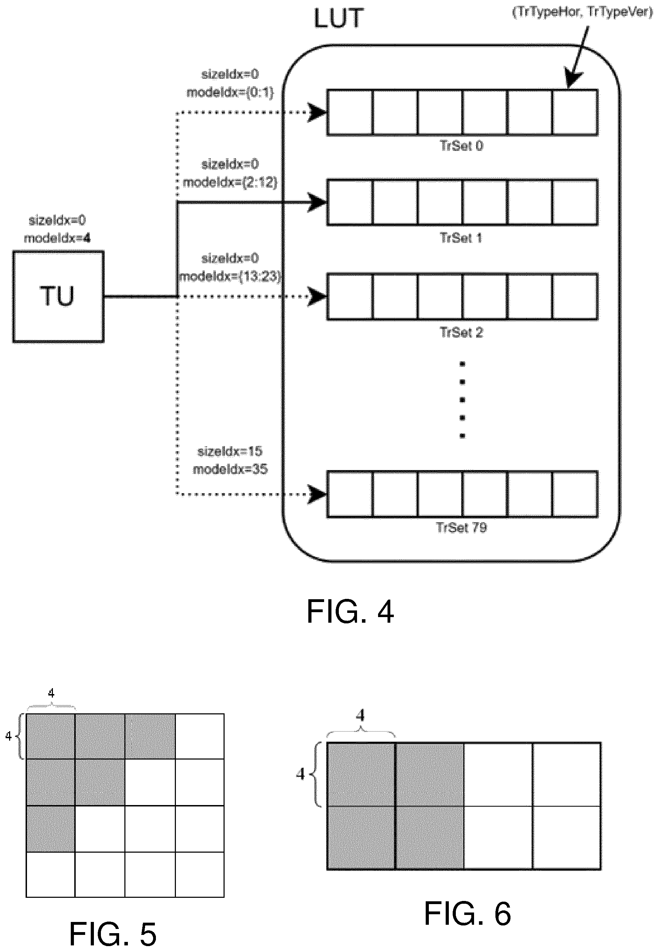

Although a total of 80 (16 transform sizes times 5 classes) different classes are considered, some of these classes may share a same transform set. In ECM, there are 58 (less than 80) unique entries in the resultant look-up table (LUT), an example of which is illustrated on FIG. 4.

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80. In addition, a dedicated mode index is assigned to MIP (Matrix Intra Prediction), resulting in a total of 36 possible modes entries in the LUT.

An example of transform set selection in the LUT for a given TU size and intra mode is illustrated in FIG. 4, wherein modeIdx is an index computed from the intra mode of the block and sizeIdx is computed based on the size of the block. For instance, 4x4 blocks have sizeIdx=0, 4x8 blocks have sizeIdx=1, and so fourth.

IDT is applied for blocks that are 16x16 or smaller and have intra modes within the proximity of horizontal and vertical intra directions, where the proximity is defined by a threshold that depends on the block size. If the transform index is equal to 3 and block satisfies the above condition, the horizontal and/or vertical identity transform is applied.

Implicit MTS is a tool in VVC that provides for a faster version of the explicit MTS where a single pair of horizontal and vertical transforms is tested instead of multiple pairs of transforms. When implicit MTS is used, no index is required to signal the MTS pair in a set as only one single pair of transforms is allowed. The benefits of the implicit MTS mode are its rapidity on the encoder side compared to the explicit MTS mode, and its high compression gain when compared with the case where MTS is switched off.

In ECM, Implicit MTS is implemented by only considering DCT2 and DTS7 transform as in VVC. In implicit MTS, no index is transmitted, the transform is selected based on the size of block.

Specifically, if the block height nTbH or width nTbW is between 4 and 16, the vertical or horizontal transform is set to DST7, respectively. Otherwise DCT2 is selected:

$$trTypeHor = ( \; nTbW >= 4 \; \&\& \; nTbW <= 16 \; ) \; ? \; DST7 : DCT2$$

$$trTypeVer = ( \; nTbH >= 4 \; \&\& \; nTbH <= 16 \; ) \; ? \; DST7 : DCT2$$

The LFNST design in ECM is extended from the LFNST design in VVC as follows. The number of LFNST sets (S) and candidates (C) are extended to S=35 and C=3, and the LFNST set (IfnstTrSetIdx) for a given intra mode (pred-ModeIntra) is derived according to the following formula:

For predModeIntra < 0 , IfnstTrSetIdx is equal to 2
IfnstTrSetIdx = predModeIntra, for predModeIntra in [0,34]
IfnstTrSetIdx = 68 - predModeIntra, for predModeIntra in [35,66]
Three different kernels, LFNST4, LFNST8, and LFNST16, are defined to indicate LFNST kernel sets, which are applied to block sizes 4xN/Nx4 (N≥4), 8xN/Nx8 (N≥8), and MxN (M, N≥16), respectively.

The kernel dimensions are specified by: (LFSNT4, LFNST8, LFNST16) = (16x16, 32x64, 32x96).

The forward LFNST is applied to top-left low frequency region, which is called Region-Of-Interest (ROI). When LFNST is applied, primary-transformed coefficients that exist in the region other than ROI are zeroed out, which is not changed from the VVC standard.

The ROI for LFNST16 is depicted in FIG. 5. It consists of six 4x4 sub-blocks, which are consecutive in scan order. Since the number of input samples is 96, transform matrix for forward LFNST16 can be Rx96. R is chosen to be 32 in ECM, 32 coefficients (two 4x4 sub-blocks) are generated from forward LFNST16 accordingly, which are placed following coefficient scan order.

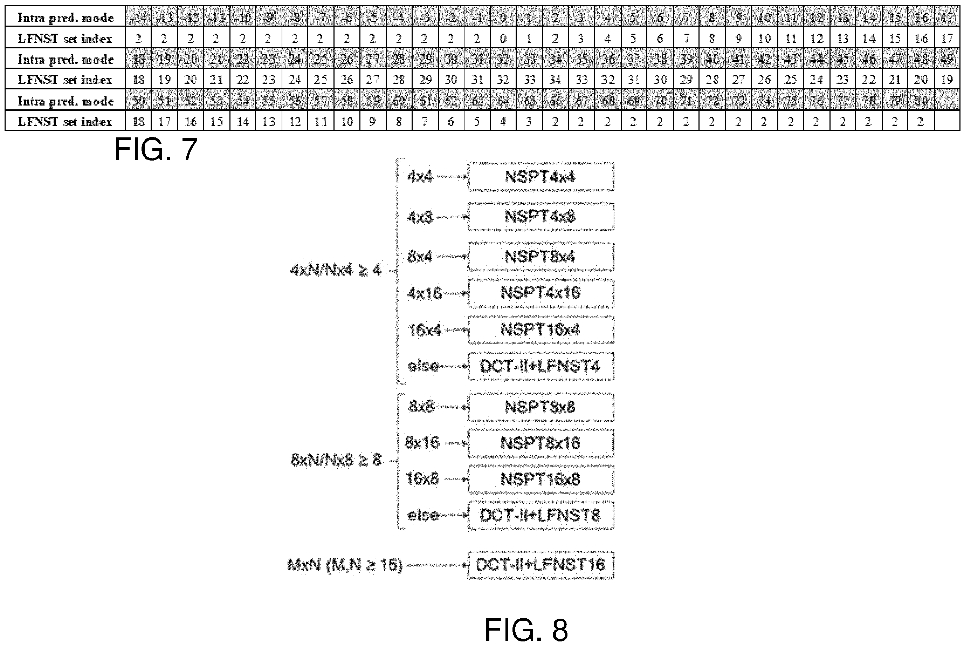

The ROI for LFNST8 is shown in FIG. 6. The forward LFNST8 matrix can be Rx64 and R is chosen to be 32. The generated coefficients are located in the same manner as with LFNST16. The mapping from intra prediction modes to these sets is shown in the table illustrated on FIG. 7 showing mapping of intra prediction modes to LFNST set index.

The NSPT (Non-Separable Primary Transform) used in ECM replaces the 2 stages of transform (DCT2-LFNST) by a single non-separable transform. In ECM, this is only allowed for small blocks as indicated in FIG. 8 which show the transform that can be used depending on the size of the block or CU.

All NSPTs consist of 35 sets and 3 candidates (similar to the current LFNST). The kernels of NSPT have the following shapes

- NSPT4x4: 16x16
- NSPT4x8/NSPT8x4: 32x20
- NSPT8x8: 64x32
- NSPT4x16/NSPT16x4: 64x24
- NSPT8x16/NSPT16x8: 128x40

Therefore, 12, 32, 40 and 88 coefficients are zeroed-out using NSPT4x8/NSPT8x4, NSPT8x8, NSPT4x16/NSPT16x4 and NSPT8x16/NSPT16x8 respectively.

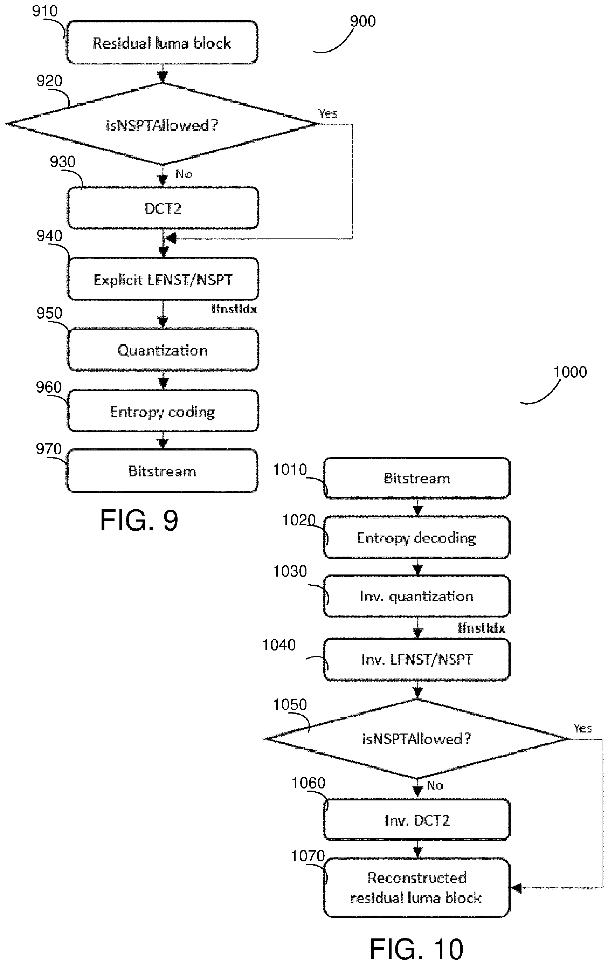

The encoder and decoder process of LFNST/NSPT is described in FIG. 9 and FIG. 10, respectively.

FIG. 9 illustrates an example of a method 900 for encoding a current block of an image or a video.

On the encoder side, residuals for a current block are obtained (910) for example by substracting prediction from original block. At 920, it is checked whether NSPT is allowed for the block. If no, the primary transformed coefficients are obtained (930) after applying the DCT2 transform on the residual luma block. This step is skipped if NSPT is allowed for the current block (yes at 920). Then, explicit LFNST or NSPT is performed (940), LFNST is performed if DCT2 has been applied or NSPT is performed if DCT2 has been skipped. For example, a rate-distortion search is carried out to select the best kernel for LFNST or NSPT in the transform set, and the index (Ifnstldx) of the selected transform in the set is signaled in the bitstream. It can be seen that the same index Ifnstidx is used, this index refers to either the transform selected in the set for the LFNST or the transform selected in the set for the NSPT, depending on whether the LFNST or NSPT is used.

The transformed coefficients are then quantized (950), and entropy coded (960) to be included in the bitstream (970).

FIG. 10 illustrates an example of a method 1000 for decoding a current block of an image or a video. On the decoder side, the bitstream (1010) is entropy decoded (1020) and the inverse quantization is applied (1030) to obtain the transformed coefficients. At 1040, secondary transform LFNST or primary transform NSPT is applied depending on whether NSPT is allowed or not. A transform set is selected among the available transform sets defined for LFNST or NSPT as described above using an intra mode obtained for the current block. Each transform LFNST and NSPT has its own transform sets but the process for selecting a transform set for a current block among the transform sets based on the intra mode is the same, the transform sets being either for the LFNST or for the NSPT.

The LFNST/NSPT index (Ifnstldx) is decoded and used to select the transform kernel in the selected transform set. The inverse LFNST or NSPT transform is applied (1040) using the selected kernel on the transformed coefficient. In cases where NSPT is not allowed (no at 1050), the inverse DCT2 transform is further applied (1060) to obtain the reconstructed residuals, otherwise the inverse DCT2 transform is skipped (yes at 1050). Then the reconstructed luma block is obtained (1070) by adding the prediction.

In the examples of FIG 9 and FIG. 10, it is assumed that MTS transform is disabled because according to the current implementation of ECM or VVC, when LFNST is used, MTS is not allowed as primary transform.

In an embodiment, an implicit mode for determining a non-separable transform (LFNST or NSPT) in a transform set is provided. In this embodiment, rather than using an index signaled in the bitsream to select the non-separable transform in a transform set of non-separable transforms, a default non-separable transform is selected based on other information obtained from the bitstream, for example using an intra mode determined for the block to be encoded/decoded. This embodiment can apply either to the non-separable transform used as primary transform (NSPT) or to the non-separable transform used a s secondary transform (LFNST).

Reducing the encoding time while maintaining good compression performance compared to a full search on the transform set can be achieved by implicit non-separable transform LFNST or NSPT. This approach infers the best transform type for a given TU via information known on the decoder side, such as the intra prediction mode and the TU size.

This embodiment proposes to alternate between different transform types for consecutive intra-prediction modes during Rate-Distortion Optimization (RDO). The LFNST or NSPT lookup table can then be fully used by distributing transforms from a same set across consecutive intra modes. For example, the index of the corresponding transform pair in the set (Ifnstldx) is computed as a modulo of the intra prediction mode.

In a variant, if implicit LFNST/NSPT is enabled, Ifnstldx is computed as the intra prediction mode (intramode) modulo N:

$$\text{Ifnstldx} = \text{intramode} \ \% \ N, \qquad (1)$$

where N is a fixed integer between 1 and the maximum number of transform candidates in the set (3 in ECM). This value determines the maximum number of candidates to be distributed in each transform sets. A benefit of this variant is that the encoder checks one transform candidates for each intra mode, instead of all 3 candidates. This reduces the encoder complexity while keeping the performance high. Because consecutive intra modes share a same transform set, however, the varint avoids from using always a same transform from the shared transform set.

In this variant, the transform set selected depends on the intra mode when mapping of intra prediction mode and LFNST set index is used as shown in FIG. 7, and the non-separable transform selected in the selected transform set also depends on the intra prediction mode. When the selected transform set is shared among several intra prediction modes, the default transform chosen from the set in the implicit mode (without signaling the index of the tranform in the set) also depends on the intra mode. Thus, this allows to keep a variety of non-separable transforms even in the implicit mode.

In the ECM, some intra modes compute a VIPM to determine which LFNST/NSPT transform set is used for non-angular (non directional) intra prediction modes (e.g., MIP or IntraTMP). In a variant, the default index Ifnstldx in the implicit mode is set to fixed to 0, 1 or 2 in the transform set for these modes. The other intra modes use (1) to compute the Ifnstldx.

In a variant, if LFNST or NSPT is used for IBC or inter blocks, the Ifnstldx is fixed to a default value that can be 0, 1 or 2 in the transform set for this mode. In that case, the transform set can be determined by deriving the intra mode using DIMD. It can also be a fixed transform set, for instance the planar transform set (the transform set indexed by intramode = 0).

In a variant, a new LUT is built where each intra mode is associated with a single LFNST or NSPT kernel. For instance, this LUT can be built offline by selecting the most used Ifnstldx for each intra mode. In that case, the LFNST or NSPT is directly inferred from the LUT regarding the intra mode of the CU on both encoder and decoder sides without the use of an index.

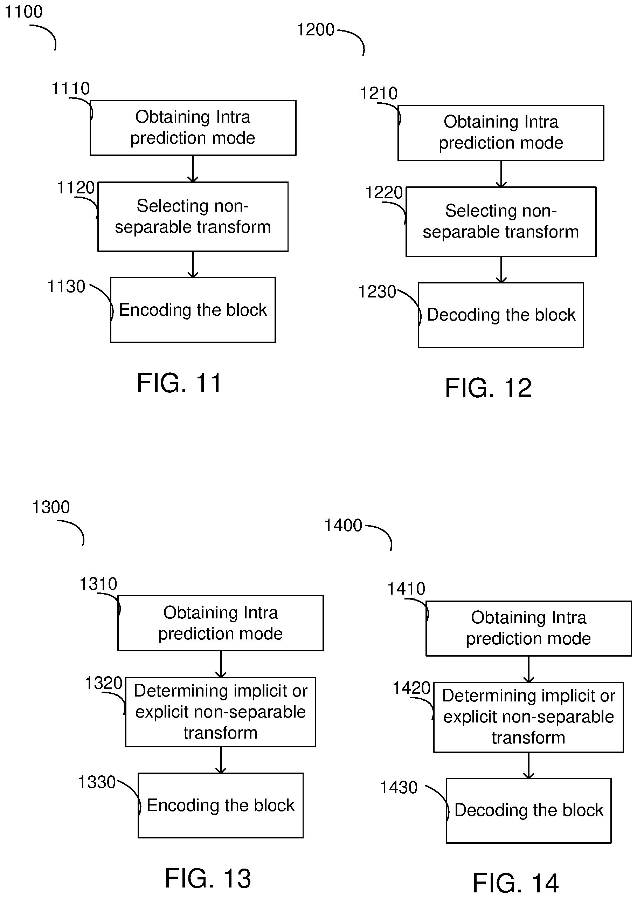

FIG. 11 illustrates an example of a method 1100 for encoding a current block of an image or a video according to this embodiment. At 1110, an intra prediction mode is obtained for the current block. It can be either an intra prediction mode used for predicting the current block or a virtual intra prediction mode determined for the block as described above. At 1120, a non-separable transform for the block is selected in a given set of non-separable transforms based on the intra prediction mode obtained for the current block at 1110. The given set of non-separable transforms can be a transform set selected from multiple sets of non-separable transforms when multiple sets of non-separable transforms are available for the current block. This selection can be done for example using the intra prediction mode. In other variant, the given set of non-separable transforms can be a LUT built as described above by selecting the most used non-separable transform for each intra mode. At 1130, the current block is encoded using the selected non-separable transform.

FIG. 12 illustrates an example of a method 1200 for decoding a current block of an image or a video according to this embodiment. At 1210, an intra prediction mode is obtained for the current block. It can be either an intra prediction mode used for predicting the current block or a virtual intra prediction mode determined for the block as described above. At 1220, a non-separable transform for the block is selected in a given set of non-separable transforms based on the intra prediction mode obtained for the current block at 1210. At 1230, the current block is decoded using the selected non-separable transform.

Another embodiment is provided wherein an implicit selection between implicit/explicit non-separable transform (e. g. LFNST or NSPT) is provided.

In this embodiment, the intra prediction mode of the current block is used to select between implicit or explicit LFNST/NSPT for the current TU. The use of this approach allows the encoder to achieve a different performance/complexity trade-off than enabling implicit or explicit LFNST/NSPT using flags signaled in high level syntax.

It should be noted that for example in the ECM, some coding tools affect certain intra modes (e.g., DIMD, TIMD), these intra modes may not be available when the transform index is processed, preventing the decoder from selecting between explicit or implicit implicit/explicit non-separable transform based on the intra prediction mode. Thus, the implicit selection is restricted to the intra prediction modes known at the parsing stage, such as planar and MIP in the case of the ECM implementation.

Therefor, the embodiment of implicit selection based on intra mode is only valid if the given intra-prediction mode is available at the parsing stage. An explicit mode for the non-separable transform (e.g. LFNST or NSPT) is defined as the mode in which an index selecting the non-separable transform in a set of non-separable transforms, while an implicit mode is defined as the mode in which the non-separable transform is selected without the use of an index explicitly signalled. For example in the implicit mode, other data from the bitstream can be used. For example, the embodiment described above using the intra prediction mode to select the non-separable transform in the set of non-separable transforms can be used.

It can be seen that the selection between implicit mode and explicit mode impacts on the parsing or not of the non-separable tranform index, the decision between implicit mode and explicit mode must thus be done using information that are available during the parsing of the bitstream.

Therefore, the implicit selection between implicit mode and explicit mode for the non-separable transform shall use intra modes that are known at the parsing stage, that is intra modes that are not derived from other modes unknown at the parsing stage. For example, intra prediction modes obtained by a DIMD process or IntraTMP are not available at the parsing stage, while a MIP or a planar intra prediction mode are available, because they are explicitly signaled in the bistream.

FIG. 13 illustrates an example of a method 1300 for encoding a current block of an image or a video according to this embodiment. At 1310, an intra prediction mode is obtained for encoding the current block. At 1320, it is determined based on the intra prediction mode obtained for the block whether an index selecting the non-separable transform in a set of non-separable transforms is determined according to the explicit mode or to the implicit mode. In a variant, the determination at 1320 is based on whether or not the intra prediction mode obtained for the block is available at the parsing stage. In another variant, the determination at 1320 is based on whether or not the intra prediction mode belongs to a given set of intra prediction modes. The given set of intra prediction modes comprises for example one or more intra prediction modes that are available at the parsing stage. In another variant, all intra prediction modes within the given set of intra prediction modes are intra prediction modes that are available at the parsing stage or can be known during the parsing stage of the bitstream. In a further variant, the given set of intra prediction modes comprises at least one of a MIP mode, an IBC mode, an intra template matching mode, or planar modes.

For example, if the intra prediction mode is in the given set of intra prediction modes, the implicit mode is used, otherwise the explicit mode is used. In another example, if the intra prediction mode is in the given set of intra prediction modes, the explicit mode is used, otherwise the implicit mode is used.

At 1330, the non-separable transform is determined in the implicit mode or the explicit mode and the block is encoded using the determined non-separable transform. In the implicit mode, the non-separable transform is determined without using an index explicitly signaled in the bitstream. In a variant, the non-separable transform can be determined according to the embodiment described above in relation with FIG. 11 and 12. In another variant, the non-separable transform can be determined using any other data obtained from the bitsteam or from reconstructed data. In another variant, the non-separable transform can be a default non-separable transform kwown between the encoder and the decoder. In the explicit mode, rate-distortion optimization is performed for determining which non-separable transform of the set provides the best rate/distortion cost and an index indicating the determined non-separable transform in the set is signaled in the bitstream.

FIG. 14 illustrates an example of a method 1400 for decoding the current block according to this embodiment. At 1410, an intra prediction mode is obtained for the current block. The intra prediction mode can be decoded from the bitstream when the intra prediction mode is one that is available at the parsing stage. Otherwise, the intra prediction mode can be set to unavailable at this is stage.

At 1420, it is determined based on the intra prediction mode obtained for the block whether an index selecting the non-separable transform in a set of non-separable transforms is determined according to the explicit mode or to the implicit mode. The same process as for the encoding method is performed here (1320 of FIG. 13). At 1430, the non-separable transform is determined in the implicit mode or the explicit mode and the block is decoded using the determined non-separable transform. In the implicit mode, the non-separable transform is for example determined according to the embodiment described above in relation with FIG. 11 and 12. In the explicit mode, the index for selecting the non-separable transform in the set is decoded.

In a variant of this embodiment, for example in the current implementation of ECM only MIP and planar intra-prediction modes are intra modes available at the parsing stage. Therefore, in this variant, only MIP and planar intra-prediction modes are used to decide between implicit mode and explicit mode for the non-separable transforms LFNST/NSPT. However, other implementations can be consdired wherein more and/or other modes are available at the parsing stage and could be used for the implicit selection.

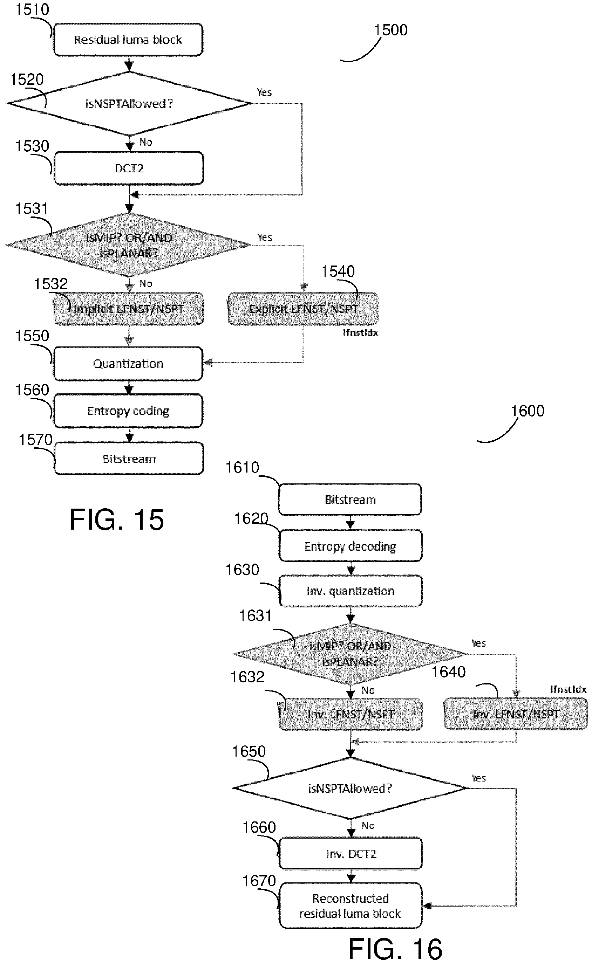

FIG. 15 and 16 illustrate the encoder and decoder processes of this variant, respectively. FIG. 15 illustrates an example of a method 1500 for encoding a current block of an image or a video according to this variant. On the encoder side, residuals for a current block are obtained (1510) for example by substracting prediction from original block. At 1520, it is checked whether NSPT is allowed for the block. If no, the primary transformed coefficients are obtained (1530) after applying the DCT2 transform on the residual luma block. This step is skipped if NSPT is allowed for the current block (yes at 1520). At 1531, it determined whether implicit mode or explicit mode is used for the non-separable transform (being either the LFNST or the NSPT). If the intra-prediction mode of the current block is planar and/or MIP, then at 1540 explicit LFNST or NSPT is performed. LFNST is performed if DCT2 has been applied or NSPT is performed if DCT2 has been skipped. For example, a rate-distortion search is carried out to select the best LFNST or NSPT kernel in the transform set, and its index (Ifnstldx) is signaled in the bitstream. For other intra-modes (no at 1531), implicit LFNST or NSPT is performed at 1532. Here, no syntax element is used for signaling the LFNST or NSPT used, the transform kernel index is derived from information known on the decoder side, for example using the embodiment described above in relation with FIG. 11 or 12. The transformed coefficients are then quantized (1550), and entropy coded (1560) to be included in the bitstream (1570).

FIG. 16 illustrates an example of a method 1600 for decoding the current block according to this variant. On the decoder side, the bitstream (1610) is entropy decoded (1620) and the inverse quantization is applied (1630) to obtain the transformed coefficients. At 1631, it determined whether implicit mode or explicit mode is used for the non-separable transform (being either the LFNST or the NSPT). If the intra-prediction mode of the current block is planar and/or MIP, then at 1640, explicit mode for LFNST/NSPT is enabled for the current block (i.e., inferred from the use of planar or MIP intra-prediction mode), the decoded LFNST/NSPT index (Ifnstldx) is used to select the LFNST/NSPT kernel in the transform set. It should be noted that in the embodiment, the determination at 1631 is also performed during the entropy decoding (1620) of the bitstream to know whether a LFNST/NSPT index (Ifnstldx) has to be decoded or not.

Otherwise (no at 1631), implicit LFNST/NSPT is enabled (1632), and the transform kernel for the non-separable transform is derived from information known on the decoder side, for example using the embodiment described with FIG. 11 and 12. The inverse LFNST/NSPT transform is applied using the selected kernel on the transformed coefficient.

At 1640 and 1632, inverse transform LFNST or inverse transform NSPT is applied depending on whether NSPT is allowed or not.

In cases where NSPT is not allowed (no at 1650), the inverse DCT2 transform is further applied (1660) to obtain the reconstructed residuals, otherwise the inverse DCT2 transform is skipped (yes at 1650). Then the reconstructed luma block is obtained (1670) by adding the prediction.

In another variant of FIG. 15 and FIG.16, implicit LFNST/NSPT is enabled for MIP and/or planar and explicit LFNST/NSPT for the other modes (i.e., blocks 1540 and 1532 ar reversed in FIG. 15, and blocks 1640 and 1632 are reversed in FIG. 16).

Another embodiment is provided wherein an implicit selection between primary transforms (before the secondary transform) is provided. For example, in the case of the implementation of ECM, this embodiment provides for a hybrid implicit/explicit MTS for LFNST. In other words, this embodiment provides for an implicit selection of the primary transform among the DCT2 or the MTS before applying a secondary transform such as LFNST.

For example, in a similar manner as for the embodiment described above, the intra mode of the current block can be used to select between applying DCT2 or multiple transform selection (MTS) before LFNST for the current TU.

As explained above, using the intra mode is valid only if the given intra-prediction mode is available at the parsing stage, that is the intra prediction mode does not require reconstructed data for its derivation.

Therefore, for example, in the current implementation of ECM, only MIP and planar intra-prediction modes can be used for such purposes. However, other implementations can be considered wherein more and/or other modes are available at the parsing stage and could be used for the implicit selection.

In this embodiment, it is then allowed to apply MTS as a primary transform followed by a secondary transform such as LFNST for some intra prediction modes. The complexity at the encoder for evaluating all combinations of intra prediction modes and possible tranforms is not increased too much as MTS followed by LFNST is allowed only for some intra prediction modes and signaling cost is also limited as no additional flag is needed to signal that MTS is enabled for a current block.

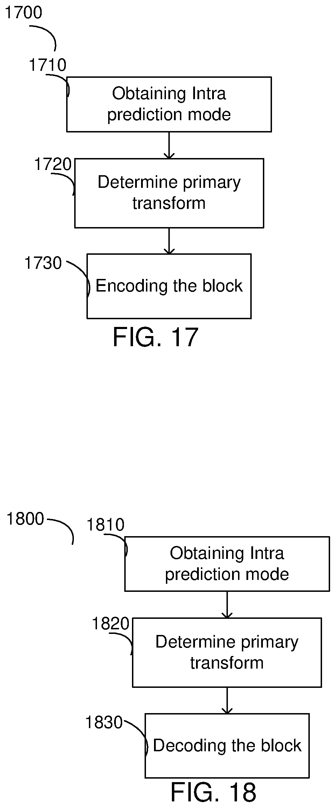

FIG. 17 illustrates an example of a method 1700 for encoding a current block of an image or a video according to this embodiment. At 1710, an intra prediction mode is obtained for encoding the block. At 1720, it is determined based on the intra prediction mode obtained for the block whether a primary transform to be applied to the block is a single separable transform or is a separable transform selected from a plurality of separable transform. At 1720, the same variants as for the embodiment previously described with FIG. 13 and 14 can be applied here. In a variant, the determination at 1720 is based on whether or not the intra prediction mode obtained for the block is available at the parsing stage. In another variant, the determination at 1720 is based on whether or not the intra prediction mode belongs to a given set of intra prediction modes. The given set of intra prediction modes comprises for example one or more intra prediction modes that are available at the parsing stage. In another variant, all intra prediction modes within the given set of intra prediction modes are intra prediction modes that are available at the parsing stage, i.e. can be known during the parsing stage of the bitstream. In a further variant, the given set of intra prediction modes comprises at least one of a MIP mode, an IBC mode, an intra template matching mode, or planar modes.

For example, if the intra prediction mode is in the given set of intra prediction modes, the single separable transform is used (for example the DCT2), otherwise a separable transform selected from a plurality of separable transforms (for example as in the MTS tool) is used. In another example, if the intra prediction mode is in the given set of intra prediction modes, the a separable transform selected from a plurality of separable transforms (MTS) is used, otherwise, the single separable transform is used (for example the DCT2) is used.

At 1730, the block is encoded using the determined separable transform. When the primary transform is obtained using the plurality of separable transforms (MTS), the same mechanism described for MTS can be used. In a variant, the index signaling the transform selected from the MTS sets can be explicitly signaled. In another, the MTS can be used in an implicit mode wherein the pair of separable transforms is selected in an MTS set, for example using an intra prediction mode obtained for the current block in a similar manner as in the embodiment relating to the implicit non-separable transform described in relation with FIG. 11 and 12.

In a further variant of 1730, the coefficients obtained for the block using the determined separable transform are further transformed using the secondary transform, the secondary transform being signaled either in the implicit mode or the explicit mode. For example, the secondray transform is LFNST.

FIG. 18 illustrates an example of a method 1800 for decoding the current block according to this variant. At 1810, an intra prediction mode is obtained for decoding the block. The intra prediction mode can be decoded from the bitstream when the intra prediction mode is one that is available at the parsing stage. Otherwise, the intra prediction mode can be set to unavailable at this stage.

At 1820, it is determined based on the intra prediction mode obtained for the block whether a primary transform to be applied to the block is a single separable transform or is a separable transform selected from a plurality of separable transform. At 1820, the same process is applied as in 1720 of FIG. 17.

At 1830, the block is reconstructed using the determined separable transform. When it is determined at 1820, that the primary transform is obtained using the plurality of separable transforms (MTS), the same mechanism described for MTS can be used. The pair of separable transform for MTS can be signaled in the implicit mode or in the explicit mode. In a further variant of 1830, before applying the separable transform, the decoded coefficients can first be transformed using the secondary inverse transform, which can be signaled either in the implicit mode or the explicit mode. The inverse tranformed coefficients are then further inverse transformed using the determined separable transform to reconstruct the current block. In the VVC standard or the current implementation of ECM, the primary transform using MTS is not allowed when secondary transform LFNST is used. The embodiment described here in the variants illustrated with FIG. 17-20 provides for enabling MTS even if LFNST is used. For example, it can be determined that LFNST is used by decoding the Ifnstidx (for example Ifnstidx >0 indicates use of LFNST or a given flag indicating use of LFNST for the current block). Then, at 1820, responsive to the determination that LFNST is used for the current block, it is determined whether MTS is allowed or not for the current block based on the intra prediction mode obtained for the current block using the same variants as the ones described for 1720 of FIG. 17 above. When MTS is allowed, MTS index is then determined either implicitly or explictly. When MTS is not allowed, DCT2 is used for example.

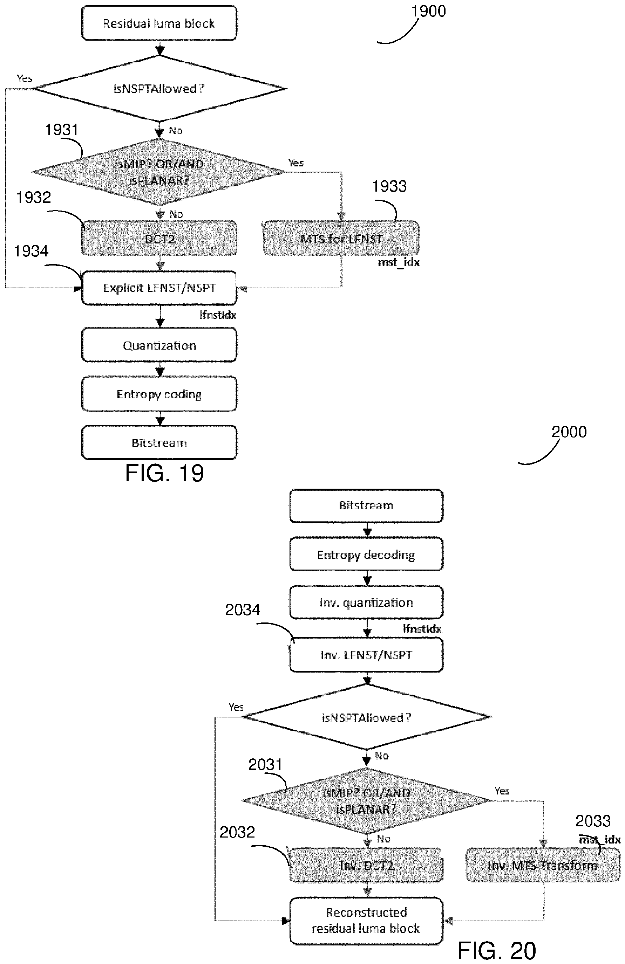

FIG. 19 and 20 illustrate the encoder and decoder processes of a variant of this embodiment respectively when applied to the current implementation of the ECM. Encoding and decoding steps are similar as those desribed in relation with FIG. 9 and FIG. 10, except for the following variations which are described below.

On the encoder side, in cases where NSPT is not allowed, the intra prediction mode of the block is used to determine (at 1931) whether to apply DCT2 or MTS on the residual luma block to obtain the primary transformed coefficients. If the intra-prediction mode of the current block is planar and/or MIP, MTS is carried out (1933). In this variant, a rate-distortion search is carried out to select the best pair of primary transforms, and an index (mts_idx) is signaled in the bitstream. For other intra-modes (no at 1931), DCT2 is performed (1932). Then LFNST/NSPT is applied to obtain the transform coefficients. Finally, the transformed coefficients are quantized, and entropy coded.

On the decoder side, the bitstream is first entropy decoded and the inverse quantization is applied to obtain the transformed coefficients. First, LFNST or NSPT if allowed is applied to the transformed coefficients. In cases where NSPT is not allowed, the intra prediction-mode of the block is used to determine (2031) which inverse transform is further applied to the transformed coefficients. If the intra-prediction mode of the current block is planar and/or MIP (yes at 2031), the inverse primary transform pair selected by the MTS index is applied (2033) to the transformed coefficients to obtain the reconstructed luma block. Otherwise (no at 2031), inverse DCT2 is used (2032).

In a variant of this embodiment, DCT2 is enabled for MIP and planar intra prediction modes and MTS for LFNST is enabled for the other intra prediction modes (i.e., blocks 1932 and 1933 are reversed in FIG. 19 and blocks 2032 and 2033 are reversed in FIG. 20).

In the variant illustrated on FIG. 19 and FIG. 20, explicit LFNST/NSPT is used. In another variant, explicit LFNST/NSPT can be replaced with implicit LFNST/NSPT (i.e., block 1934 in FIG. 19 and block 2034 in FIG. 20 are replaced by implicit LFNST/NSPT 1532 in FIG. 15 and 1632 in FIG. 16, no Ifnstidx is used as input to 2034 in FIG. 20).

In the variant illustrated on FIG. 19 and FIG. 20, explicit MTS is used. In another variant, MTS for LFNST is replaced by an MTS in an implicit mode and no mts_idx is transmitted (i.e., 1933 in FIG. 19 and 2033 in FIG. 20 are replaced by an MTS in an implicit mode wherein no mts_idx is used as input to 2033 in FIG. 20).

In another variant, DCT2 is replaced by MTS in an implicit mode and no mts_idx is transmitted (i.e., 1932 in FIG. 19 and 2032 in FIG. 20 are replaced by an MTS in an implicit mode. No mts_idx is used as input to 2032 in FIG. 20).

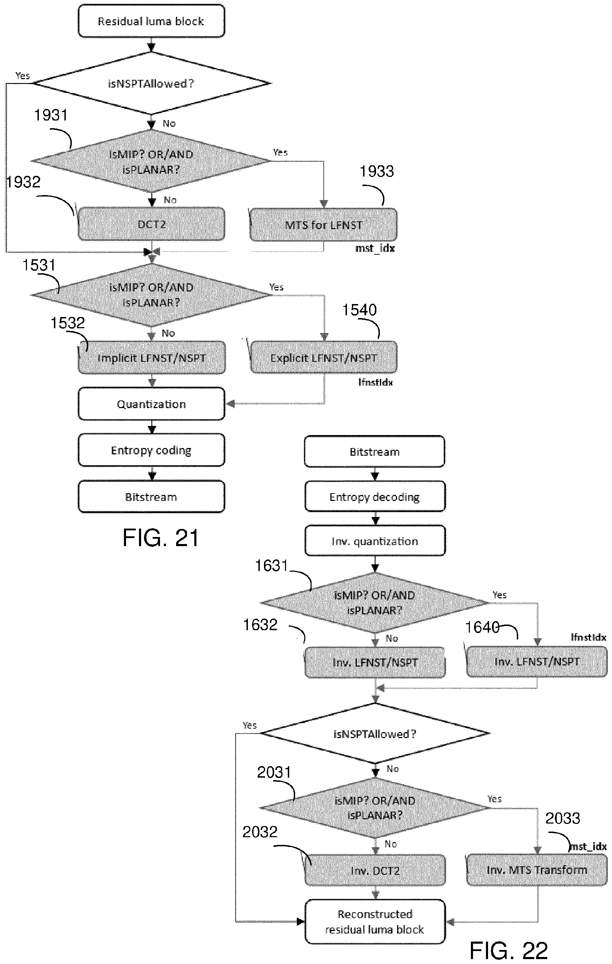

In a further variant, the explicit LFNST/NSPT can be conditioned as in the embodiment described in relation with FIG. 15 and 16. This variant provides for a hybrid implicit/explicit MTS before a hybrid implicit/explicit LFNST. In this variant, embodiment described with FIG. 15 and FIG. 16 is combined with the embodiment previously described with FIG. 19 and FIG. 20. The intra prediction mode of the current block is used to select first between DCT2 and MTS and then between implicit or explicit LFNST/NSPT for the current TU. The use of this variant allows the encoder to achieve a different performance/complexity trade-off than what is proposed in previous embodiments. As previously, this variant is only valid if the given intra-prediction mode is available at the parsing stage. Therefore, using the current implementation of ECM, only MIP and planar intra-prediction modes are used to decide between implicit and explicit LFNST/NSPT. FIG. 21 and FIG. 22 illustrate the encoder and decoder processes of the variant respectively.

On the encoder side, in cases where NSPT is not allowed, the intra prediction-mode of the block is used to determine (1931) whether to apply DCT2 or MTS on the residual luma block to obtain the primary transformed coefficients. If the intra-prediction mode of the current block is planar and/or MIP, MTS is carried out (1933). In this variant, a rate-distortion search is carried out to select the best pair of primary transforms, and an index (mts_idx) is signaled in the bitstream. For other intra-modes (no at 1931), DCT2 is performed (1932). Then, if the intra-prediction mode of the current block is planar and/or MIP, explicit LFNST/NSPT is performed (1540). In this variant, a rate-distortion search is carried out to select the best LFNST/NSPT kernel in the transform set, and its index (IfnstIdx) is signaled in the bitstream. For other intra-modes (no at 1531), implicit LFNST/NSPT is performed (1532). Here, no syntax element is used for LFNST/NSPT. The transform kernel index can be derived for example from information known on the decoder side, for example using the embodiment described with FIG. 11 and 12. Finally, the transformed coefficients are quantized, and entropy coded.

On the decoder side, the bitstream is first entropy decoded and the inverse quantization is applied to obtain the transformed coefficients. If explicit LFNST/NSPT is enabled for the current block (i.e., planar or MIP intra-prediction mode is used 1631), the LFNST/NSPT index (Ifnstldx) is used (1640) to select the LFNST/NSPT kernel in the transform set. Otherwise (no at 1631), implicit LFNST/NSPT is enabled (1632), and the transform kernel is derived from information known on the decoder side, for example using the embodiment described with FIG. 11 and 12. Then, the inverse LFNST/NSPT transform is applied using the selected kernel on the transformed coefficient. In cases where NSPT is not allowed, if the intra-prediction mode of the current block is planar and/or MIP (2031), the inverse primary transform pair selected (2033) by MTS is applied to the transformed coefficients to obtain the reconstructed luma block. Otherwise (no at 2031), inverse DCT2 is used (2032).

In a variant, DCT2 is enabled for MIP and planar intra prediction modes and MTS for LFNST is enabled for the other intra prediction modes (i.e., 1932 and 1933 are reversed in FIG. 21, and 2032 and 2033 are reversed in FIG. 22).

In a variant, implicit LFNST/NSPT is enabled for MIP and/or planar and explicit LFNST/NSPT for the other modes (i.e., 1540 and 1532 are reversed in FIG. 21 and 1640 and 1632 are reversed in FIG. 22).

In another variant, MTS for LFNST is replaced by implicit MTS and no mts_idx is transmitted (i.e., 1933 in FIG 21 and 2033 in FIG. 22 are replaced by implicit MTS. No mts_idx is used as input to 2033 in FIG. 22).

In another variant, DCT2 is replaced by implicit MTS and no mts_idx is transmitted (i.e., 1932 and 2032 are replaced by implicit MTS in FIG. 21 and in FIG. 22. No mts_idx is used as input to 2032 in FIG. 22).

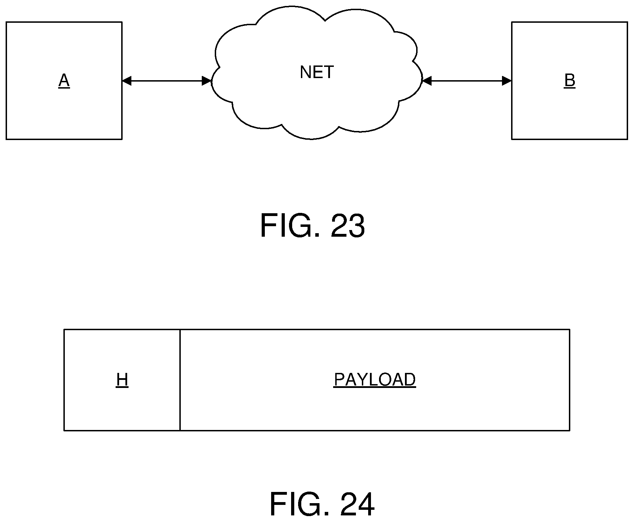

In an embodiment, illustrated in FIG. 23, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 24 shows an example of the syntax of a signal transmitted over a packet-based transmission protocol. Each transmitted packet P comprises a header H and a payload PAYLOAD. In some embodiments, the payload PAYLOAD may comprise data representative of at least one part of an image or video encoded according to any one of the embodiments described above. The payload can also comprise any signaling as described above.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art. Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.

b. DASH MPD (Media Presentation Description) Descriptors, for example as used in DASH and transmitted over HTTP, a Descriptor is associated to a Representation or collection of Representations to provide additional characteristic to the content Representation.

c. RTP header extensions, for example as used during RTP streaming.

d. ISO Base Media File Format, for example as used in OMAF and using boxes which are object-oriented building blocks defined by a unique type identifier and length also known as 'atoms' in some specifications.

e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described herein. Features of these embodiments can be provided alone or in any combination, across various claim categories and types, for example:

A method, comprising obtaining an intra prediction mode for a block of an image, determining based on the intra prediction mode obtained for the block whether an index of a non-separable transform providing for selecting the non-separable transform for the block in a first set of non-separable transforms is determined in an explicit mode or in an implicit mode, wherein in the explicit mode the index of the non-separable transform is explicitly signaled in a bitstream and in the implicit mode, the index of the non-separable transform is derived from other data signaled in the bitstream, encoding the block using the determined non-separable transform. Variants of the embodiment that can be used alone or in combination can comprise at least one of: - the non-separable transform is a primary transform to be applied to the block, or secondary transform to be applied to a version of the block obtained after applying a primary transform,

- when the index of the non-separable transform is implicitly derived from other data signaled in the bitstream, the index of the non-separable transform is obtained based on the intra prediction mode obtained for the block.

A method, comprising: obtaining an intra prediction mode for a block of an image, determining based on the intra prediction mode obtained for the block whether a primary transform to be applied to the block is a single separable transform or is a separable transform selected from a plurality of separable transform, encoding the block using the determined separable transform.

Variants that can be used alone or in combination can comprise at least one of:

- determining based on the intra prediction mode obtained for the block whether a primary transform to be applied to the block is a single separable transform or is a separable transform selected from a plurality of separable transforms, depends on whether the intra prediction mode belongs to a given set of intra prediction modes,
- all intra prediction modes within the given set of intra prediction modes are intra prediction modes that are available or can be known during the parsing stage of the bitstream,
- if the intra prediction mode is in the given set of intra prediction modes, the primary transform is single separable transform otherwise the the primary transform is selected from a plurality of separable transform,
- if the intra prediction mode is not in the given set of intra prediction modes, the primary transform is single separable transform otherwise the primary transform is selected from a plurality of separable transform,
- the given set of intra prediction modes comprises at least one of a MIP, IBC, intra template matching or planar modes,
- applying the primary transform to the block is followed by applying a secondary transform which is a non-separable transform,
- the secondary transform can be implicitly or explicitly signaled in the bitstream,
- when the primary transform is a separable transform selected from a plurality of separable transforms, the separable transform is signaled in an explicit mode according to which an index indicating the separable transform in the plurality is signaled in the bitstream,
- when the primary transform is a separable transform selected from a plurality of separable transforms, the separable transform is signaled in an implicit mode according to which the separable transform is derived the plurality using data signaled in the bitstream other than the index of the separable transform.

**Claims**

1. A method, comprising:

obtaining an intra prediction mode for a block of an image,
selecting a non-separable transform for the block in a first set of non-separable transforms, based on the intra prediction mode obtained for the block,
encoding the block using the selected non-separable transform.

2. An apparatus comprising one or more processors operable to

obtain an intra prediction mode for a block of an image,
select a non-separable transform for the block in a first set of non-separable transforms, based on the intra prediction mode obtained for the block,
encode the block using the selected non-separable transform.

3. A method comprising:

obtaining an intra prediction mode for a block of an image,
selecting a non-separable transform for the block in a first set of non-separable transforms, based on the intra prediction mode obtained for the block,
decoding the block using the selected non-separable transform.

4. An apparatus comprising one or more processors operable to

obtain an intra prediction mode for a block of an image,
select a non-separable transform for the block in a first set of non-separable transforms, based on the intra prediction mode obtained for the block, decode the block using the selected non-separable transform.

5. The method of claim 1 or 3 or the apparatus of claim 2 or 4, wherein the non-separable transform is a primary transform to be applied to the block or a secondary transform to be applied to a version of the block obtained after applying a primary transform.

6. The method of any one of claims 1, 3 or 5 or the apparatus of any one of claims 2 or 4-5, wherein selecting the non-separable transform for the block in the first set of non-separable transforms, based on the intra prediction mode obtained for the block comprises obtaining a transform index based on the intra prediction mode.

7. The method or the apparatus of claim 6, wherein the transform index is obtained as an index of the intra prediction mode modulo a given integer.

8. The method or the apparatus of claim 7, wherein the given integer is between 1 and a number of non-separable transforms in the first set.

9. The method or the apparatus of claim 6, wherein the intra prediction mode is obtained for the block among a second set of intra prediction modes, and selecting the non-separable transform for the block in the first set of non-separable transforms, based on the intra prediction mode obtained for the block comprises:

obtaining a plurality of first sets of non-separable transforms, each one of the intra prediction mode of the second set of intra prediction modes being associated to one first set of non-separable transforms of the plurality,
wherein at least one first set of the plurality is shared between at least two intra prediction modes of the second set.

10. The method or the apparatus of claim 6, wherein selecting the non-separable transform for the block in the first set of non-separable transforms, based on the intra prediction mode obtained for the block comprises selecting the first set of non-separable transforms from a plurality of first sets of non-separable transforms using the intra prediction mode.

11. The method of any one of claims 1, 3 or 5-9 or the apparatus of any one of claims 2 or 4-9, responsive to a determination that the block is encoded using a prediction mode other than a directional intra prediction mode, an index of the intra prediction mode obtained the block is set to default given value.

12. The method of any one of claims 1, 3 or 5-11 or the apparatus of any one of claims 2 or 4-11, wherein selecting the non-separable transform for the block in the first set of non-separable transforms based on the intra prediction mode obtained for the block further comprises determining based on the intra prediction mode obtained for the block whether an index of the non-separable transform is determined in an explicit mode or in an implicit mode, wherein in the explicit mode the index of the non-separable transform is explicitly signaled in a bitstream and in the implicit mode, the index of the non-separable transform is derived from other data signaled in the bitstream.

13. The method or the apparatus of claim 12, wherein determining based on the intra prediction mode obtained for the block whether the index of a non-separable transform is determined in an explicit mode or in an implicit mode depends on whether the intra prediction mode belongs to a given set of intra prediction modes that are available during the parsing stage of the bitstream.

14. The method of any one of claims 1, 3 or 5-11 or the apparatus of any one of claims 2 or 4-11, wherein the non-separable transform is a secondary transform to be applied to a version of the block obtained after applying a primary transform, and wherein the method further comprises or the one or more processors are further operable to determining based on the intra prediction mode obtained for the block whether the primary transform to be applied to the block is a single separable transform or is a separable transform selected from a plurality of separable transform.

15. The method or the apparatus of claim 14, wherein determining based on the intra prediction mode obtained for the block whether a primary transform to be applied to the block is a single separable transform or is a separable transform selected from a plurality of separable transforms depends on whether the intra prediction mode belongs to a given set of intra prediction modes are available during the parsing stage of the bitstream.

100A

**FIG. 1A**

100B

**FIG. 1B**

FIG. 1C

FIG. 2

300

330    335    340    350

| Entropy Decoding | | Partitioning | | Inverse Quantization | | Inverse Transform |

355

Prediction Mode —370

Intra Prediction

360

375 — Motion Compensation

372 — Motion Refinement

380

Reference Picture Buffer

365 — In-loop Filters

385

Post-decoding Processing

## FIG. 3

LUT

(TrTypeHor, TrTypeVer)

sizeIdx=0
modeIdx={0:1}

TrSet 0

sizeIdx=0
modeIdx={2:12}

TrSet 1

sizeIdx=0
modeIdx={13:23}

TrSet 2

sizeIdx=0
modeIdx=**4**

TU

sizeIdx=15
modeIdx=35

TrSet 79

FIG. 4

4

4

FIG. 5

4

4

FIG. 6

**FIG. 7**

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNSI set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNSI set index | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNSI set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

**FIG. 8**

4xN/Nx4 ≥ 4:
- 4x4 → NSPT4x4
- 4x8 → NSPT4x8
- 8x4 → NSPT8x4
- 4x16 → NSPT4x16
- 16x4 → NSPT16x4
- else → DCT-II+LFNST4

8xN/Nx8 ≥ 8:
- 8x8 → NSPT8x8
- 8x16 → NSPT8x16
- 16x8 → NSPT16x8
- else → DCT-II+LFNST8

MxN (M,N ≥ 16) → DCT-II+LFNST16

910 Residual luma block

900

920 isNSPTAllowed?  Yes

930 DCT2

No

940 Explicit LFNST/NSPT

lfnstIdx

950 Quantization

960 Entropy coding

970 Bitstream

**FIG. 9**

1000

1010 Bitstream

1020 Entropy decoding

1030 Inv. quantization

lfnstIdx

1040 Inv. LFNST/NSPT

1050 isNSPTAllowed?  Yes

No

1060 Inv. DCT2

1070 Reconstructed residual luma block

**FIG. 10**

1100

1110

Obtaining Intra
prediction mode

1120

Selecting non-
separable transform

1130

Encoding the block

**FIG. 11**

1200

1210

Obtaining Intra
prediction mode

1220

Selecting non-
separable transform

1230

Decoding the block

**FIG. 12**

1300

1310

Obtaining Intra
prediction mode

1320

Determining implicit or
explicit non-separable
transform

1330

Encoding the block

**FIG. 13**

1400

1410

Obtaining Intra
prediction mode

1420

Determining implicit or
explicit non-separable
transform

1430

Decoding the block

**FIG. 14**

1510 — Residual luma block

1520 — isNSPTAllowed?  — Yes

1530 — DCT2  — No

1531 — isMIP? OR/AND isPLANAR? — Yes

1532 — Implicit LFNST/NSPT

1540 — Explicit LFNST/NSPT — lfnstIdx

1550 — Quantization

1560 — Entropy coding

1570 — Bitstream

**FIG. 15**

1500

---

1610 — Bitstream

1620 — Entropy decoding

1630 — Inv. quantization

1631 — isMIP? OR/AND isPLANAR? — Yes

1632 — Inv. LFNST/NSPT

1640 — Inv. LFNST/NSPT — lfnstIdx — No

1650 — isNSPTAllowed? — Yes

1660 — Inv. DCT2 — No

1670 — Reconstructed residual luma block

**FIG. 16**

1600

1700

1710

Obtaining Intra
prediction mode

1720

Determine primary
transform

1730

Encoding the block

FIG. 17

1800

1810

Obtaining Intra
prediction mode

1820

Determine primary
transform

1830

Decoding the block

FIG. 18

1900

Residual luma block

isNSPTAllowed?

Yes

No

1931

isMIP? OR/AND
isPLANAR?

Yes

1933

1932

No

DCT2

MTS for LFNST

mst_idx

1934

Explicit LFNST/NSPT

lfnstIdx

Quantization

Entropy coding

Bitstream

**FIG. 19**

2000

Bitstream

Entropy decoding

Inv. quantization

lfnstIdx

2034

Inv. LFNST/NSPT

isNSPTAllowed?

Yes

No

2031

isMIP? OR/AND
isPLANAR?

Yes

2033

mst_idx

2032

No

Inv. DCT2

Inv. MTS Transform

Reconstructed
residual luma block

**FIG. 20**

FIG. 21

FIG. 22

A ↔ NET ↔ B

FIG. 23

| H | PAYLOAD |
|---|---------|

FIG. 24

| | Europäisches Patentamt<br>European Patent Office<br>Office européen des brevets | **EUROPEAN SEARCH REPORT** | Application Number<br>EP 24 30 5439 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | Lainema Jani: "CE6-related: LFNST with one mode",<br>15. JVET meeting; 20190703 - 20190712; Gothenburg; (the Joint Video Exploration Team of ISO/IEC JTC1/SC29/WG11 and ITU-T SG.16 ) 2019-07-01,<br>no. JVET-O0350<br>1 July 2019 (2019-07-01), pages 1-4, XP093199096,<br>Retrieved from the Internet:<br>URL:https://jvet-experts.org/doc_end_user/documents/15_Gothenburg/wg11/JVET-O0350-v2.zip | 1-11 | INV.<br>H04N19/12<br>H04N19/157<br>H04N19/159<br>H04N19/176<br>H04N19/70<br>H04N19/61 |
| Y | * abstract *<br>* sections 1-3 *<br>& LAINEMA (NOKIA) J: "CE6-related: LFNST with one mode",<br>15. JVET MEETING; 20190703 - 20190712; GOTHENBURG; (THE JOINT VIDEO EXPLORATION TEAM OF ISO/IEC JTC1/SC29/WG11 AND ITU-T SG.16 ),<br>,<br>no. JVET-O0350 ; m48468<br>1 July 2019 (2019-07-01), XP030219309,<br>Retrieved from the Internet:<br>URL:http://phenix.int-evry.fr/jvet/doc_end_user/documents/15_Gothenburg/wg11/JVET-O0350-v2.zip JVET-O0350.pptx<br>[retrieved on 2019-07-01]<br>* the whole document *<br>----- | 14,15 | |
| X | US 2022/377334 A1 (NASER KARAM [FR] ET AL) 24 November 2022 (2022-11-24)<br>* paragraphs [0048] - [0056] *<br>-----<br>-/-- | 1-11 | |

| | | TECHNICAL FIELDS<br>SEARCHED (IPC) |
|---|---|---|
| | | H04N |

The present search report has been drawn up for all claims

| Place of search | Date of completion of the search | Examiner |
|---|---|---|
| Berlin | 19 September 2024 | Santos Luque, Rocio |

Europäisches
Patentamt

European
Patent Office

Office européen
des brevets

# EUROPEAN SEARCH REPORT

**Application Number**

EP 24 30 5439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EGILMEZ (QUALCOMM) H E ET AL: "CE6-related: An LFNST Index Signaling with Bin Prediction", 128. MPEG MEETING; 20191007 - 20191011; GENEVA; (MOTION PICTURE EXPERT GROUP OR ISO/IEC JTC1/SC29/WG11), , no. m50539 25 September 2019 (2019-09-25), XP030206670, Retrieved from the Internet: URL:http://phenix.int-evry.fr/mpeg/doc_end _user/documents/128_Geneva/wg11/m50539-JVE T-P0568-v1-JVET-P0568_v1.zip JVET-P0568_v1.docx [retrieved on 2019-09-25] * abstract * * sections 1-2, 6 * ----- | 1-13 | |
| X | M-S CHIANG ET AL: "CE6-related: Simplifications for LFNST", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0292 ; m48402 4 July 2019 (2019-07-04), XP030219134, Retrieved from the Internet: URL:http://phenix.int-evry.fr/jvet/doc_end _user/documents/15_Gothenburg/wg11/JVET-O0 292-v2.zip JVET-O0292-v2.docx [retrieved on 2019-07-04] * the whole document * ----- | 1-4,9-11 | **TECHNICAL FIELDS SEARCHED (IPC)** |

-/--

The present search report has been drawn up for all claims

| Place of search | Date of completion of the search | Examiner |
|---|---|---|
| Berlin | 19 September 2024 | Santos Luque, Rocio |

EPO FORM 1503 03.82 (P04C01)

page 2 of 3

| | Europäisches Patentamt |
|---|---|
| | European Patent Office |
| | Office européen des brevets |

# EUROPEAN SEARCH REPORT

**Application Number**

EP 24 30 5439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | M-S CHIANG ET AL: "CE6-related: Transform selection with intra prediction mode for implicit MTS", 16. JVET MEETING; 20191001 - 20191011; GENEVA; (THE JOINT VIDEO EXPLORATION TEAM OF ISO/IEC JTC1/SC29/WG11 AND ITU-T SG.16 ), , no. JVET-P0166 ; m50125 4 October 2019 (2019-10-04), XP030216448, Retrieved from the Internet: URL:http://phenix.int-evry.fr/jvet/doc_end _user/documents/16_Geneva/wg11/JVET-P0166-v3.zip JVET-P0166-v2-clean.docx [retrieved on 2019-10-04] * section 2 * | 14,15 | |
| A | BROSS B ET AL: "Versatile Video Coding (Draft 6)", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O2001-vE; JVET-O2001 31 July 2019 (2019-07-31), pages 1-455, XP030293944, Retrieved from the Internet: URL:https://jvet-experts.org/doc_end_user/ documents/15_Gothenburg/wg11/JVET-O2001-v1 4.zip JVET-O2001-vE.docx [retrieved on 2019-07-31] * section 8.7.4 * | 1-15 | **TECHNICAL FIELDS SEARCHED (IPC)** |
| A | WO 2020/243258 A1 (INTERDIGITAL VC HOLDINGS INC [US]) 3 December 2020 (2020-12-03) * paragraphs [0032] - [0034], [0046] - [0048] * | 1-15 | |

The present search report has been drawn up for all claims

| Place of search | Date of completion of the search | Examiner |
|---|---|---|
| Berlin | 19 September 2024 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

page 3 of 3

## ANNEX TO THE EUROPEAN SEARCH REPORT
## ON EUROPEAN PATENT APPLICATION NO.

EP 24 30 5439

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | Publication date | Patent family member(s) | | Publication date |
|---|---|---|---|---|
| US 2022377334 A1 | 24-11-2022 | CN | 114830656 A | 29-07-2022 |
| | | EP | 4032271 A1 | 27-07-2022 |
| | | US | 2022377334 A1 | 24-11-2022 |
| | | WO | 2021052804 A1 | 25-03-2021 |
| WO 2020243258 A1 | 03-12-2020 | CA | 3141992 A1 | 03-12-2020 |
| | | CN | 113950834 A | 18-01-2022 |
| | | CN | 118631987 A | 10-09-2024 |
| | | EP | 3977732 A1 | 06-04-2022 |
| | | JP | 2022534999 A | 04-08-2022 |
| | | KR | 20220047725 A | 19-04-2022 |
| | | SG | 11202113262W A | 30-12-2021 |
| | | US | 2022312040 A1 | 29-09-2022 |
| | | WO | 2020243258 A1 | 03-12-2020 |

EPO FORM P0459

For more details about this annex : see Official Journal of the European Patent Office, No. 12/82